# EUROPEAN PATENT SPECIFICATION

(11) **EP 4 181 226 B1**
(45) Date of publication and mention of the grant of the patent: **25.11.2026**
(21) Application number: 22854146.2
(22) Date of filing: 24.08.2022
(51) Int. Cl.: H01M 4/04, B05C 5/02, B05C 11/10, F16L 59/02, F16L 59/14, F16L 59/075

(54) **SECONDARY BATTERY ELECTRODE SLURRY COATING DEVICE, AND ELECTRODE SLURRY COATING METHOD USING SAME**
SEKUNDÄRBATTERIEELEKTRODENAUFSCHLÄMMUNGSBESCHICHTUNGSVORRICHTUNG UND ELEKTRODENAUFSCHLÄMMUNGSBESCHICHTUNGSVERFAHREN DAMIT
DISPOSITIF DE REVÊTEMENT DE SUSPENSION ÉPAISSE D'ÉLECTRODE DE BATTERIE SECONDAIRE, ET PROCÉDÉ DE REVÊTEMENT DE SUSPENSION ÉPAISSE D'ÉLECTRODE L'UTILISANT

(30) Priority: 27.08.2021 KR 20210113571
(43) Date of publication of application: 17.05.2023
(73) Proprietor: LG Energy Solution, Ltd., Seoul 07335 (KR)
(72) Inventor: KOO, Jae Pil, Daejeon 34122 (KR); SON, Jae Huoung, Daejeon 34122 (KR); AHN, Chang Bum, Daejeon 34122 (KR); LEE, Jae Wook, Daejeon 34122 (KR)
(74) Representative: Plasseraud IP
(86) International application number: PCT/KR2022/012650
(87) International publication number: WO 2023/027505

(56) References cited:
- EP-A1- 2 573 840
- JP-A- 2000 028 080
- KR-A- 20150 105 794
- US-A1- 2017 336 154
- US-A1- 2019 162 357

## Description

### [Technical Field]

The present application claims the benefit of priority based on Korean Patent Application No. 10-2021-0113571 dated on August 27, 2021.

The present invention relates to a device for coating an electrode slurry for a secondary battery and a method of coating an electrode slurry using the same.

### [Background Art]

As technology development and demand for mobiles devices increase, the demands for secondary batteries as energy sources are rapidly increasing, and among these secondary batteries, a lot of research has been made on lithium secondary batteries with a high energy density and a high discharge voltage and the lithium secondary batteries have been commercialized and widely used.

Types of secondary batteries currently widely used include lithium ion batteries, lithium polymer batteries, nickel cadmium batteries, nickel hydrogen batteries, nickel zinc batteries, and the like. Such a unit battery cell, that is, an operating voltage of the unit battery cell ranges from about 2.5 V to 4.2 V. Accordingly, when an output voltage that is higher than the above range is required, a plurality of battery cells may be connected in series to form a battery pack. Alternatively, a plurality of battery cells may be connected in parallel to form a battery pack according to a charge/discharge capacity required for the battery pack. Accordingly, the number of battery cells included in the battery pack may be variously set according to a required output voltage or a charge/discharge capacity.

A battery cell as such a secondary battery, in particular, a battery cell as a lithium secondary battery, is generally formed in a structure in which an electrode assembly including a positive electrode containing a lithium transition metal oxide as an electrode active material, a negative electrode containing a carbon-based active material, and a separator is impregnated with a lithium electrolyte.

The electrode of the battery cell is generally manufactured by applying an electrode slurry on a metal foil. The electrode slurry is prepared by mixing an organic solvent with an electrode mixture consisting of an electrode active material, a conductive material, and a binder for adhering to the electrode foil. Here, a lithium cobalt-based oxide, a lithium manganese-based oxide, a lithium nickel-based oxide, and a lithium composite oxide are mainly used as a positive active material, and a carbon-based material is mainly used as a negative active material.

In addition, the electrode of the battery cell is generally formed such that an active material, a conductive material, and a binder are dispersed in a solvent to prepare a slurry and then the slurry is directly applied to a current collector or is applied on an upper portion of a separate support and then a film peeled from the support is laminated on the current collector. Thereafter, the electrode is wound in a roll shape, and then the residual solvent and residual moisture are removed through an electrode drying device.

In this case, in the process of applying the slurry, when a temperature of the slurry is high, the applied slurry is densely applied in a central portion, and when the temperature of the slurry is low, the applied slurry is densely applied to both sides. Therefore, an amount of the slurry applied to the current collector, that is, a height of the applied slurry, becomes non-uniform according to the temperature of the slurry such that there is a problem in that the electrode having a non-uniform rolling rate and a non-uniform rolling density is manufactured. EP 2 573 840 A1 discloses a device for coating an electrode slurry comprising a slurry tank, a slot die and a slurry transfer pipe comprising a supply pipe surrounded by a "hot water circulation pipe" which is used to control the temperature of the slurry.

### [Disclosure]

### [Technical Problem]

An object of the present invention is to provide a device for coating an electrode slurry, which can keep a temperature of an electrode slurry constant in a process of applying a slurry, and a method of coating an electrode slurry using the same.

The invention is as defined by the appended claims.

### [Technical Solution]

The present invention relates to a device for coating an electrode slurry. In one embodiment of the present invention, there is provided a device for coating an electrode slurry, which includes a slurry tank configured to store an electrode slurry, a slot die configured to discharge the electrode slurry stored in the slurry tank to a current collector, and a slurry transfer pipe configured to transfer the electrode slurry stored in the slurry tank to a slot die. The slurry transfer pipe comprises a first pipe fluidly connected to the slurry tank and the slot die, a second pipe spaced apart from an outer wall of the first pipe by a predetermined interval and forming a vacuum space between the first pipe and the second pipe in an operational stage, and wherein the slurry transfer pipe includes a third pipe located between the first pipe and the second pipe and surrounding the first pipe, and has a structure in which a fluid is configured to be introduced between the first pipe and the third pipe, wherein the fluid is in a liquid or a gel state.

In another embodiment of the present invention, there is provided a method of coating an electrode slurry using the above-described device for coating an electrode slurry. The method of coating an electrode slurry according to the present invention comprises discharging the electrode slurry to the current collector moving in a coating direction (MD) through the slot die and applying the electrode slurry to the current collector, and drying the electrode slurry applied to the current collector. In the applying of the electrode slurry, when heights of the electrode slurry applied to the current collector correspond to a central portion and a peripheral portion on both sides of the central portion based on a width direction (TD), a difference in thickness between the central portion and the peripheral portion may be less than or equal to 5%.

### [Advantageous Effects]

In accordance with the present invention, a device for coating an electrode slurry for a secondary battery and a method of coating an electrode slurry for a secondary battery includes a slurry transfer pipe with a structure including first, second and third pipes so that a temperature of the electrode slurry temperature can be kept constant when the electrode slurry stored in a slurry tank is transferred to a slot die.

Accordingly, the electrode slurry is uniformly applied to a current collector so that a defective rate in electrode manufacturing can be reduced.

### [Brief Description of the Drawings]

FIG. 1 is a schematic diagram illustrating a device for coating an electrode slurry for a secondary battery, which includes a slurry transfer pipe, according to the present invention.
FIG. 2 is a cross-sectional view illustrating the slurry transfer pipe.
FIG. 3 is a schematic diagram illustrating a device for coating an electrode slurry for a secondary battery, which includes a slurry transfer pipe, according to the present invention.
FIG. 4 is a cross-sectional view illustrating the slurry transfer pipe.
FIG. 5 is a schematic diagram illustrating a device for coating an electrode slurry for a secondary battery, which includes a slurry transfer pipe, according to the present invention.
FIG. 6 is a partial perspective view illustrating the slurry transfer pipe.

### [Best Mode]

The present invention relates to a device for coating an electrode slurry. In one embodiment of the present invention, there is provided a device for coating an electrode slurry, which includes a slurry tank configured to store an electrode slurry, a slot die configured to discharge the electrode slurry stored in the slurry tank to a current collector, and a slurry transfer pipe configured to transfer the electrode slurry stored in the slurry tank to a slot die. In this case, the slurry transfer pipe has a structure including a first pipe fluidly connected to the slurry tank and the slot die, a second pipe spaced apart from an outer wall of the first pipe by a predetermined interval and forming a vacuum space between the first pipe and the second pipe in an operational stage.

In an example not according to the invention, the slurry transfer pipe may further include an insulation member which surrounds an outer circumferential surface of the first pipe.

The slurry transfer pipe includes a third pipe positioned between the first pipe and the second pipe and configured to surround the first pipe, and the slurry transfer pipe has a structure in which a fluid is introduced between the first pipe and the third pipe, wherein the fluid is in a liquid or a gel state.

In an embodiment, the slurry transfer pipe may further include a fluid supply part fluidly connected to the third pipe and configured to supply a fluid between the first pipe and the third pipe, and a temperature controller configured to control a temperature of the fluid supplied between the first pipe and the third pipe.

In addition, the temperature controller may control the temperature of the fluid introduced between the first pipe and the third pipe in the range of 20 °C to 30 °C.

In addition, the slot die may further include a temperature sensor configured to measure the temperature of the slurry which is transferred into the slot die or discharged from the slot die.

Meanwhile, in the slurry transfer pipe, the second pipe may have a structure in which an openable/closable air entrance opening is formed on one side of the second pipe.

In addition, the device for coating an electrode slurry according to the present invention may further include a coating roll configured to support and transfer the current collector, and a drying chamber configured to dry the electrode slurry discharged to the current collector.

Furthermore, the slurry transfer pipe may further include a feed pump configured to supply the electrode slurry stored in the slurry tank to the slot die.

In addition, the present invention provides a method of coating an electrode slurry using the above-described device for coating an electrode slurry. The method of coating an electrode slurry according to the present invention includes discharging the electrode slurry to the current collector moving in a coating direction MD through the slot die and applying the electrode slurry to the current collector, and drying the electrode slurry applied to the current collector. In this case, in the applying of the electrode slurry, when heights of the electrode slurry applied to the current collector correspond to a central portion and a peripheral portion on both sides of the central portion based on a width direction TD, a difference in thickness between the central portion and the peripheral portion may be less than or equal to 5%.

In addition, the applying of the electrode slurry includes transferring the electrode slurry stored in the slurry tank to the slot die through the slurry transfer pipe. Meanwhile, in the transferring of the electrode slurry to the slot die, a temperature of the electrode slurry may be controlled in the range of 20 °C to 30 °C.

The present invention may be modified into various forms and may have a variety of embodiments, and therefore, specific embodiments will be described in detail.

In the present invention, the terms "comprising," "having," and the like are used to specify the presence of a feature, a number, a step, an operation, a component, an element, or a combination thereof described herein, and they do not preclude the presence or addition of one or more other features, numbers, steps, operations, components, elements, or combinations thereof.

In addition, in the present invention, when a portion of a layer, a film, a region, a plate, or the like is described as being "on" another portion, this includes not only a case in which the portion is "directly on" another portion but also a case in which still another portion is present between the portion and another portion. Conversely, when a portion of a layer, a film, a region, a plate, or the like is described as being "under" another portion, this includes not only a case in which the portion is "directly under" another portion but also a case in which still another portion is present between the portion and another portion. In addition, in the present application, as being disposed "on" may include the case of being disposed not only on an upper portion but also on a lower portion.

In the present disclosure, a "vacuum double pipe" refers to a slurry transfer pipe configured to transfer an electrode slurry stored in a slurry tank to a slot die and refers to a structure including a first pipe and a second pipe. More specifically, in the present disclosure, the vacuum double pipe includes the first pipe fluidly connected to the slurry tank and the slot die, and the second pipe provided to be spaced apart from an outer wall (an outer peripheral surface) of the first pipe by a predetermined interval. In this case, a vacuum space is formed between the first pipe and the second pipe so that the slurry transfer pipe in the present invention may form a vacuum double pipe structure.

Meanwhile, the slurry transfer pipe of the present invention includes the vacuum space between the first pipe and the second pipe so that the electrode slurry transferred to a flow path of the first pipe may not be affected by an ambient temperature. Accordingly, when the electrode slurry stored in the slurry tank is transferred to the slot die, the device for coating an electrode slurry according to the present invention may keep a temperature of the electrode slurry constant.

Hereinafter, the device for coating an electrode slurry for a secondary battery according to the present invention and the method of coating an electrode slurry using the same will be described in detail with reference to the drawings.

### [First embodiment] - not according to the invention

According to a first embodiment of the present disclosure, a device for coating an electrode slurry for a secondary battery, which includes a slurry transfer pipe, is provided.

### Device for coating an electrode slurry

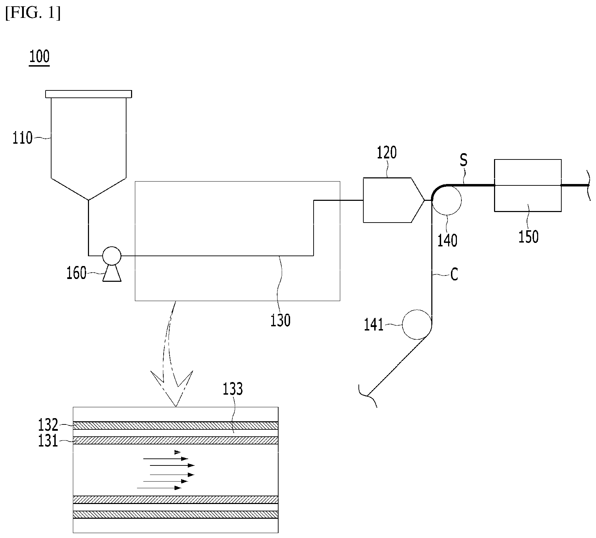

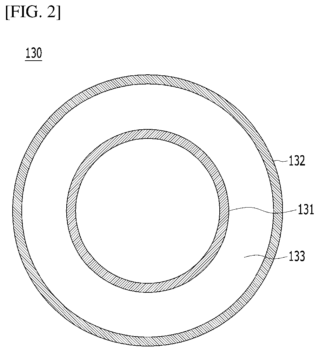

FIG. 1 is a schematic diagram illustrating a device for coating an electrode slurry for a secondary battery, which includes a slurry transfer pipe, according to the present disclosure, and FIG. 2 is a cross-sectional view illustrating the slurry transfer pipe.

Referring to FIGS. 1 and 2, the device 100 for coating an electrode slurry according to the present disclosure includes a slurry tank 110 configured to store an electrode slurry, a slot die 120 configured to discharge an electrode slurry S stored in the slurry tank 110 to a current collector C, and a slurry transfer pipe 130 configured to transfer the electrode slurry S stored in the slurry tank 110 to the slot die 120.

In this case, the slurry transfer pipe 130 has a vacuum double pipe structure including a first pipe 131 fluidly connected to the slurry tank 110 and the slot die 120, and a second pipe 132 provided to be spaced apart from an outer wall of the first pipe 131 by a predetermined interval and configured to form a vacuum space 133 between the first pipe 131 and the second pipe 132.

In the present disclosure a "vacuum double pipe", not forming part of the present invention, refers to the slurry transfer pipe 130 configured to transfer the electrode slurry stored in the slurry tank 110 to the slot die 120 and refers to a structure including the first pipe 131 and the second pipe 132. More specifically, in the present disclosure, the vacuum double pipe includes the first pipe 131 fluidly connected to the slurry tank 110 and the slot die 120, and the second pipe 132 provided to be spaced apart from the outer wall (an outer peripheral surface) of the first pipe 131 by a predetermined interval. In this case, the vacuum space 133 is formed between the first pipe 131 and the second pipe 132 so that the slurry transfer pipe 130 forms a vacuum double pipe structure.

Meanwhile, the slurry transfer pipe 130 of the present disclosure includes the vacuum space 133 between the first pipe 131 and the second pipe 132 so that the electrode slurry S transferred to a flow path of the first pipe 131 may not be affected by an ambient temperature. Accordingly, when the electrode slurry S stored in the slurry tank 110 is transferred to the slot die 120, the device 100 for coating an electrode slurry according to the present disclosure may keep a temperature of the electrode slurry S constant.

Conventionally, in the process of applying the electrode slurry S to the current collector C, when the temperature of the electrode slurry S is higher than a set temperature, the electrode slurry S applied to the current collector C is densely applied in a central portion, and when the temperature of electrode slurry S is lower than the set temperature, the electrode slurry S is densely applied to both sides. Therefore, an amount of the electrode slurry S applied to the current collector C, that is, a height of the electrode slurry S applied to the current collector C, becomes non-uniform according to the temperature of the electrode slurry S so that there is a problem in that the electrode having a non-uniform rolling rate and a non-uniform rolling density is manufactured.

As described above, the present disclosure includes the slurry transfer pipe 130 having a dual structure formed of the first and second pipes 131 and 132 so that, when the electrode slurry S stored in the slurry tank 110 is transferred to the slot die 120, the temperature of the electrode slurry S may be kept constant. Accordingly, according to the present disclosure, the electrode slurry S is uniformly applied to the current collector C so that a defective rate in electrode manufacturing can be reduced.

The second pipe 132 of the slurry transfer pipe 130 is fixed to be spaced apart from an outer side of the first pipe 131 by a predetermined interval so that the vacuum space 133 is formed between the first pipe 131 and the second pipe 132.

In particular, an openable/disclosable air entrance opening (not shown) may be formed at one side of the second pipe 132. In particular, air inside the vacuum space 133 is discharged to the outside through the air entrance opening of the second pipe 132 using a separate vacuum pump and then the air entrance opening is sealed so that the vacuum space 133 may become in a vacuum state. In particular, after removing air remaining in a vacuum region through the air entrance opening, the air entrance opening is sealed so that a vacuum degree of the vacuum space 133 between the first and second pipes 131 and 132 may be increased.

The vacuum space 133 prevents the first pipe 131 from being directly exposed to the outside air and forms a vacuum layer between the outside air and the first pipe 131 so that a temperature of the first pipe 131 is less affected by an outside temperature to keep a temperature constant and thus a variation in temperature inside the first pipe 131 becomes small.

Meanwhile, although not shown in the drawings, a connection pipe fluidly connected to the vacuum region may be further included at the air entrance opening. In addition, the connection pipe may further include a check valve configured to allow the air inside the vacuum region to move in one direction. The check valve may discharge the air of the vacuum region to the outside so that the vacuum region becomes vacuum.

Here, the "being fluidly connected" means that pipes communicate with each other and may mean that the air entrance opening and the connection pipe are physically connected.

A structure of the slot die 120 is not particularly limited. For example, although not shown in the drawing, the slot die 120 may include a slit to which the electrode slurry transferred from the slurry transfer pipe 130 is supplied, and a discharge port configured to discharge the electrode slurry S passing through the slit toward the current collector C.

In addition, the slurry transfer pipe 130 may further include a feed pump 160 configured to supply the electrode slurry S stored in the slurry tank 110 to the slot die 120. The feed pump 160 may be connected to the slurry tank 110 to supply the electrode slurry S to the slot die 120. A supply amount of the electrode slurry S may be controlled according to the number of rotations of the feed pump 160.

In addition, the device 100 for coating an electrode slurry according to the present disclosure may further include a coating roll 140 configured to support and transfer the current collector C, and a drying chamber 150 configured to dry the electrode slurry S applied to the current collector C.

The drying chamber 150 may dry the current collector C coated with the electrode slurry S to complete an electrode plate. The current collector C is accommodated in the drying chamber 150 by a transfer device, and while passing through the drying chamber 150, the drying chamber 150 may be formed to have a length in which electrode slurry S can be completely dried.

The current collector C is supplied with constant tension by a guide roll 141. A metallic sheet, for example, known metal foil, may be generally used as the current collector C. Aluminum, nickel, or the like may be used as a positive electrode plate of the current collector C. Copper, nickel, a stainless steel, or the like may be used as a negative electrode plate of the current collector C. Preferably, aluminum foil may be used as a positive current collector, and copper foil may be used as a negative current collector.

In the device 100 for coating an electrode slurry according to the present disclosure, the slurry tank 110 may include a storage tank for storing an electrode slurry, a transfer tank, and a supply tank. In one example, the device 100 for coating an electrode slurry may supply a mixed electrode slurry from a mixer to the storage tank using a pump and supply the electrode slurry stored in the storage tank to the transfer tank. In addition, in order to coat the current collector with the electrode slurry transferred to the transfer tank, the device 100 may constantly feed the electrode slurry to the supply tank. Meanwhile, each tank may further include a temperature controller for controlling a temperature of the electrode slurry.

In this case, the tanks are fluidly connected to each other and may be connected by the above-described slurry transfer pipe 130. Accordingly, when the electrode slurry is transferred to the slot die 120, the temperature of the electrode slurry may be kept constant.

Due to the above structure, when the electrode slurry S stored in the slurry tank 110 is transferred to the slot die 120, the device 100 for coating an electrode slurry according to the present disclosure may keep a temperature of the electrode slurry S constant.

Accordingly, the device 100 for coating an electrode slurry according to the present disclosure may uniformly apply the electrode slurry S to the current collector C so that a defective rate in electrode manufacturing can be reduced.

### [Second embodiment] - not according to the invention

According to a second embodiment of the present disclosure, a device for coating an electrode slurry for a secondary battery, which includes a slurry transfer pipe, is provided.

### Device for coating an electrode slurry

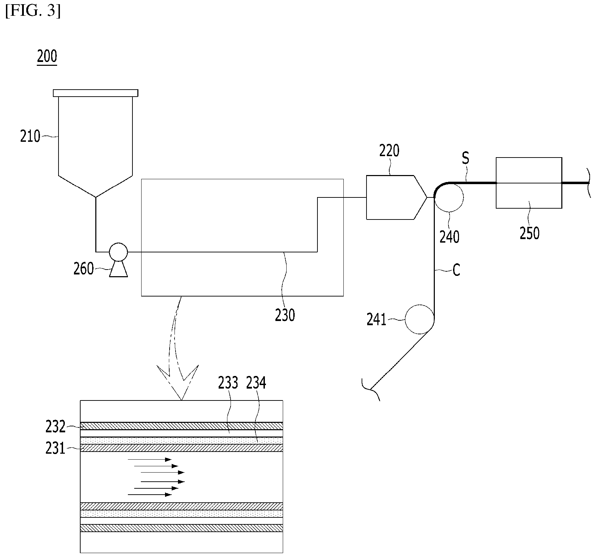

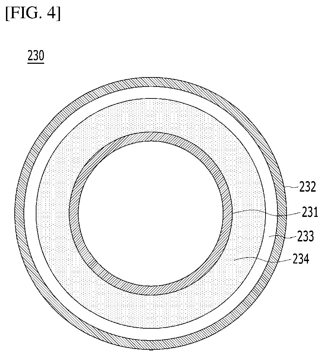

FIG. 3 is a schematic diagram illustrating a device for coating an electrode slurry for a secondary battery, which includes a slurry transfer pipe, according to the present disclosure, and FIG. 4 is a cross-sectional view illustrating the slurry transfer pipe.

Referring to FIGS. 3 and 4, a device 200 for coating an electrode slurry according to the present dislcosure includes a slurry tank 210 configured to store an electrode slurry, a slot die 220 configured to discharge an electrode slurry S stored in the slurry tank 210 to a current collector C, and a slurry transfer pipe 230 configured to transfer the electrode slurry S stored in the slurry tank 210 to the slot die 220.

In this case, the slurry transfer pipe 230 has a vacuum double pipe structure including a first pipe 231 fluidly connected to the slurry tank 210 and the slot die 220, and a second pipe 232 provided to be spaced apart from an outer wall of the first pipe 231 by a predetermined interval and configured to form a vacuum space 233 between the first pipe 231 and the second pipe 232.

In the present disclosure, the vacuum space 233 prevents the first pipe 231 from being directly exposed to the outside air and forms a vacuum layer between the outside air and the first pipe 231 so that a temperature of the first pipe 231 is less affected by an outside temperature to keep a temperature constant and thus a variation in temperature inside the first pipe 231 becomes small.

In addition, the slurry transfer pipe 230 of the device 200 for coating an electrode slurry according to the present disclosure further includes an insulation member 234. More specifically, the slurry transfer pipe 230 may further include the insulation member 234 surrounding an outer circumferential surface of the first pipe 231.

The insulation member 234 may be made of a foam material and formed to surround the outer circumferential surface of the first pipe 231. The insulation member 234 may be formed of polyurethane foam.

Due to the above structure, when the electrode slurry S stored in the slurry tank 210 is transferred to the slot die 220, the device 200 for coating an electrode slurry according to the present disclosure may keep a temperature of the electrode slurry S constant.

Accordingly, the device 200 for coating an electrode slurry according to the present disclosure may uniformly apply the electrode slurry S to the current collector C so that a defective rate in electrode manufacturing can be reduced.

### [Third embodiment]

According to a third embodiment of the present invention, a device for coating an electrode slurry for a secondary battery, which includes a slurry transfer pipe, is provided.

### Device for coating an electrode slurry

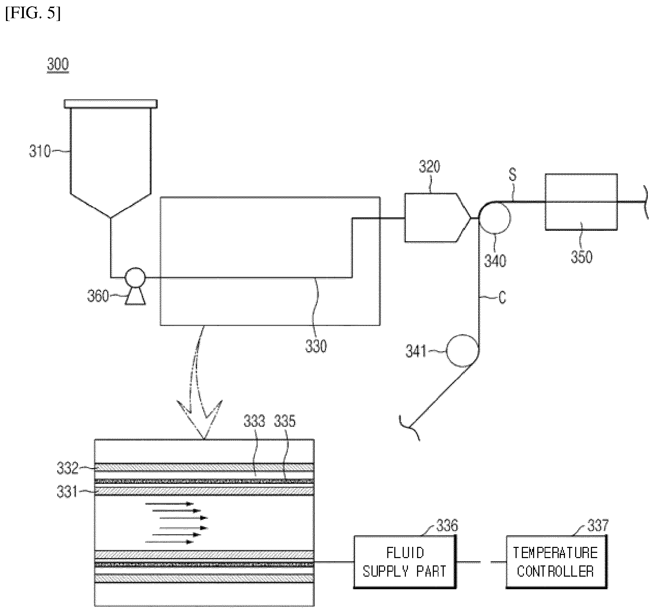

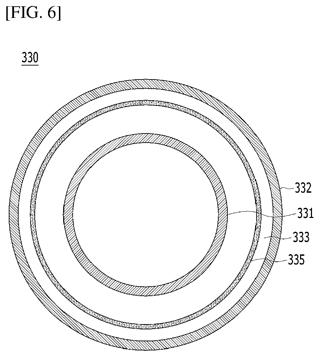

FIG. 5 is a schematic diagram illustrating a device for coating an electrode slurry for a secondary battery, which includes a slurry transfer pipe, according to the present invention, and FIG. 6 is a partial perspective view illustrating the slurry transfer pipe.

Referring to FIGS. 5 and 6, a device 300 for coating an electrode slurry according to the present invention includes a slurry tank 310 configured to store an electrode slurry, a slot die 320 configured to discharge an electrode slurry S stored in the slurry tank 310 to a current collector C, and a slurry transfer pipe 330 configured to transfer the electrode slurry S stored in the slurry tank 310 to the slot die 320.

In this case, the slurry transfer pipe 330 has a pipe structure including a first pipe 331 fluidly connected to the slurry tank 310 and the slot die 320, and a second pipe 332 spaced apart from an outer wall of the first pipe 331 by a predetermined interval and forming a vacuum space 333 between the first pipe 331 and the second pipe 332.

In the present invention, the vacuum space 333 prevents the first pipe 331 from being directly exposed to the outside air and forms a vacuum layer between the outside air and the first pipe 331 so that a temperature of the first pipe 331 is less affected by an outside temperature to keep a temperature constant and thus a variation in temperature inside the first pipe 331 becomes small.

In the device 300 for coating an electrode slurry according to the present invention, the slurry transfer pipe 330 includes a third pipe 335 which is positioned between the first pipe 331 and the second pipe 332 and surrounds the first pipe 331. In addition, a structure in which a fluid is introduced between the first pipe 331 and the third pipe 335 is provided.

In addition, the device 300 for coating an electrode slurry according to the present invention may further include a fluid supply part 336 fluidly connected to the third pipe 335 and configured to supply a fluid between the first pipe 331 and the third pipe 335, and a temperature controller 337 configured to control a temperature of the fluid supplied between the first pipe 331 and the third pipe 335.

The fluid supply part 336 may be a general fluid pump. Furthermore, although not shown in the drawings, a fluid control valve (not shown) may be included between the third pipe 335 and the fluid supply part 336 to control an amount of the fluid introduced between the first pipe 331 and the third pipe 335.

The temperature controller 337 may be a heater or a cooler, may detect the temperature of the electrode slurry transferred into the slot die 320 by attaching a temperature sensor to the slot die 320 to detect, and may easily control the temperature of the electrode slurry transferred into the slurry transfer pipe 330.

Meanwhile, although not shown in the drawings, the third pipe 335 and the fluid supply part 336 may be connected to each other to allow the fluid to circulate. For example, the third pipe 335 may have a structure in which a fluid inlet and a fluid outlet are formed, and the fluid supply part 336 may be fluidly connected to allow a fluid to circulate through the fluid inlet and the fluid outlet.

Meanwhile, the fluid introduced between the first pipe 331 and the third pipe 335 is in a liquid or gel state. For example, the fluid may be a heat transfer fluid or may be water. In a specific embodiment, by filling a heat transfer fluid or water between the first pipe 331 and the third pipe 335, the temperature of the electrode slurry transferred into the first pipe 331 may be kept constant. The first pipe may be a thermally conductive metal pipe.

In particular, the temperature controller 337 may control the temperature of the fluid introduced between the first pipe 331 and the third pipe 335 in the range of 20 °C to 30 °C and in the range of 21 °C to 28 °C, 23 °C to 27 °C, or 24 °C to 26 °C. For example, the temperature of the fluid may be controlled at an average temperature of 25 °C. The temperature controller 337 may control a temperature of the fluid between the first pipe 331 and the third pipe 335, thereby controlling the temperature of the electrode slurry S to be transferred in the first pipe 331. In particular, when the temperature of the electrode slurry S is too high, the electrode slurry S applied to the current collector C may be densely applied in a center portion, and when the temperature of the electrode slurry S is too low, the electrode slurry S applied to the current collector C may be applied and concentrated to both sides. Therefore, the temperature of the electrode slurry may be controlled in the range of 20 °C to 30 °C.

In addition, the device 300 for coating an electrode slurry according to the present invention may further include a temperature sensor (not shown). More specifically, the temperature sensor may be included in the slot die. For example, the slot die 320 may further include a temperature sensor configured to measure the temperature of the electrode slurry which is transferred into the slot die 320 or discharged from the slot die.

When the temperature of the electrode slurry measured by the temperature sensor is out of the range of 20 °C to 25 °C, a temperature of a fluid may be controlled using the temperature controller 337.

Due to the above structure, when the electrode slurry S stored in the slurry tank 310 is transferred to the slot die 320, the device 300 for coating an electrode slurry according to the present invention may keep a temperature of the electrode slurry S constant.

Accordingly, the device 300 for coating an electrode slurry according to the present invention may uniformly apply the electrode slurry S to the current collector C so that a defective rate in electrode manufacturing can be reduced.

### [Fourth embodiment]

According to a fourth embodiment of the present invention, a method of coating an electrode slurry using the device for coating an electrode slurry is provided.

### Method of coating an electrode slurry

According to the present invention, the method of coating an electrode slurry using the device for coating an electrode slurry is provided. The method of coating an electrode slurry according to the present invention includes discharging the electrode slurry to the current collector moving in a coating direction MD through the slot die and applying the electrode slurry to the current collector, and drying the electrode slurry applied to the current collector.

In this case, in the applying of the electrode slurry, when heights of the electrode slurry applied to the current collector correspond to a central portion and a peripheral portion on both sides of the central portion based on a width direction TD, a difference in thickness between the central portion and the peripheral portion may be less than or equal to 5%. This means that, when the electrode slurry S stored in the slurry tank is transferred to the slot die, the temperature of the electrode slurry S is kept constant.

In a specific example, the applying of the electrode slurry includes transferring the electrode slurry stored in the slurry tank to the slot die through the slurry transfer pipe, and in the transferring of the electrode slurry, the temperature of the electrode slurry may be controlled in the range of 20 °C to 30 °C and in the range of 21 °C to 28 °C, 23 °C to 27 °C, or 24 °C to 26 °C.

For example, the temperature of the electrode slurry may be controlled at an average temperature of 25 °C. The temperature controller 337 may control a temperature of the fluid, thereby controlling the temperature of the electrode slurry S to be transferred in the first pipe 331. In particular, when the temperature of the electrode slurry S is too high, the electrode slurry S applied to the current collector C may be densely applied to a center portion, and when the temperature of the electrode slurry S is too low, the electrode slurry S applied to the current collector C may be densely applied to both sides. Therefore, the temperature of the electrode slurry may be controlled in the range of 20 °C to 30 °C.

The method of coating an electrode slurry according to the present invention uses the above-described device for coating an electrode slurry, and when the electrode slurry stored in the slurry tank is transferred to the slot die, the temperature of the electrode slurry may be kept constant.

Accordingly, the method of coating an electrode slurry according to the present invention may uniformly apply the electrode slurry S to the current collector C so that a defective rate in electrode manufacturing can be reduced.

As described above, the present invention has been described in more detail with reference to the accompanying drawings and the embodiments.

### [Description of Reference Numerals]

S: electrode slurry
C: current collector
100, 200, and 300: devices for coating an electrode slurry
110, 210, and 310: slurry tanks
120, 220, and 320: slot dies
130, 230, and 330: slurry transfer pipes
131, 231, and 331: first pipes
132, 232, and 332: second pipes
133, 233, and 333: vacuum spaces
234: insulation member
335: third pipe
336: fluid supply part
337: temperature controller
140, 240, and 340: coating rolls
150, 250, and 350: drying chambers
160, 260, and 360: feed pumps

## Claims

1. A device (300) for coating an electrode slurry (S), comprising:
a slurry tank (310) configured to store an electrode slurry (S);
a slot die (320) configured to discharge the electrode slurry (S) stored in the slurry tank (310) to a current collector (C); and
a slurry transfer pipe (330) configured to transfer the electrode slurry (S) stored in the slurry tank (310) to the slot die (320),
wherein the slurry transfer pipe (330) has a structure comprising:
a first pipe (331) fluidly connected to the slurry tank (310) and the slot die (320);
a second pipe (332) spaced apart from an outer wall of the first pipe (331) by a predetermined interval and forming a vacuum space (333) between the first pipe (331) and the second pipe (332) in an operational stage, and
wherein the slurry transfer pipe (330) includes a third pipe (335) located between the first pipe (331) and the second pipe (332) and surrounding the first pipe (331), and has a structure in which a fluid is configured to be introduced between the first pipe (331) and the third pipe (335),
wherein the fluid is in a liquid or a gel state.

2. The device (300) of claim 1, further comprising:
a fluid supply part (336) fluidly connected to the third pipe (335) and configured to supply a fluid between the first pipe (331) and the third pipe (335); and
a temperature controller (337) configured to control a temperature of the fluid supplied between the first pipe (331) and the third pipe (335).

3. The device of claim 2, wherein a temperature controller (337) is configured to control a temperature of the fluid introduced between the first pipe (331) and the third pipe (335) in the range of 20 °C to 30 °C.

4. The device (300) of claim 1, wherein the slot die (320) further includes a temperature sensor configured to measure the temperature of the slurry transferred into the slot die (320) or discharged from the slot die (320).

5. The device (300) of claim 1, wherein the second pipe (332) has a structure having an openable/disclosable air entrance opening formed on one side of the second pipe (332).

6. The device (300) of claim 1, further comprising:
a coating roll (340) configured to support and transfer the current collector (C); and
a drying chamber (350) configured to dry the electrode slurry (S) discharged to the current collector (C).

7. The device (300) of claim 1, wherein the slurry transfer pipe (330) further includes a feed pump (360) configured to supply the electrode slurry (S) stored in the slurry tank (310) to the slot die (320).

8. A method of coating an electrode slurry (S) using the device (300) for coating an electrode slurry (S) according to claim 1, the method comprising:
discharging the electrode slurry (S) to the current collector (C) moving in a coating direction (MD) through the slot die (320) and applying the electrode slurry (S) to the current collector (C); and
drying the electrode slurry (S) applied to the current collector (C),
wherein, in the applying of the electrode slurry (S), when heights of the electrode slurry (S) applied to the current collector (C) correspond to a central portion and a peripheral portion on both sides of the central portion based on a width direction (TD), a difference in thickness between the central portion and the peripheral portion is less than or equal to 5%.

9. The method of claim 8, wherein:
the applying of the electrode slurry (S) includes transferring the electrode slurry (S) stored in the slurry tank (310) to the slot die (320) through the slurry transfer pipe (330); and
in the transferring of the electrode slurry (S) to the slot die (320), a temperature of the electrode slurry (S) is controlled in the range of 20 °C to 30 °C.

## Patentansprüche

1. Vorrichtung (300) zum Beschichten einer Elektrodensuspension (S), umfassend:
einen Suspensionsbehälter (310) der dafür ausgelegt ist eine Elektrodensuspension (S) zu speichern;
eine Schlitzdüse (320) die dafür ausgelegt ist die im Suspensionsbehälter (310) gespeicherte Elektrodensuspension (S) an einen Stromsammler (C) abzugeben; und
ein Suspensionsübertragungsrohr (330) das dafür ausgelegt ist die im Suspensionsbehälter (310) gespeicherte Elektrodensuspension (S) zur Schlitzdüse (320) zu übertragen,
wobei das Suspensionsübertragungsrohr (330) eine Struktur aufweist die Folgendes umfasst:
ein erstes Rohr (331) das mit dem Suspensionsbehälter (310) und der Schlitzdüse (320) in Fluidverbindung steht;
ein zweites Rohr (332) das von einer Außenwand des ersten Rohrs (331) um einen vorbestimmten Abstand beabstandet ist und in einer Betriebsphase einen Vakuumraum (333) zwischen dem ersten Rohr (331) und dem zweiten Rohr (332) bildet, und
wobei das Suspensionsübertragungsrohr (330) ein drittes Rohr (335) enthält das sich zwischen dem ersten Rohr (331) und dem zweiten Rohr (332) befindet und das erste Rohr (331) umgibt, und eine Struktur aufweist bei der ein Fluid dafür ausgelegt ist, zwischen dem ersten Rohr (331) und dem dritten Rohr (335) eingebracht zu werden,
wobei das Fluid in einem flüssigen oder einem Gelzustand vorliegt.

2. Vorrichtung (300) nach Anspruch 1, ferner umfassend:
einen Fluidzuführteil (336) der mit dem dritten Rohr (335) in Fluidverbindung steht und dafür ausgelegt ist ein Fluid zwischen das erste Rohr (331) und das dritte Rohr (335) zuzuführen; und
einen Temperaturregler (337) der dafür ausgelegt ist eine Temperatur des zwischen das erste Rohr (331) und das dritte Rohr (335) zugeführten Fluids zu regeln.

3. Vorrichtung nach Anspruch 2, wobei ein Temperaturregler (337) dafür ausgelegt ist eine Temperatur des zwischen das erste Rohr (331) und das dritte Rohr (335) eingebrachten Fluids im Bereich von 20 °C bis 30 °C zu regeln.

4. Vorrichtung (300) nach Anspruch 1, wobei die Schlitzdüse (320) ferner einen Temperatursensor enthält der dafür ausgelegt ist die Temperatur der in die Schlitzdüse (320) übertragenen oder aus der Schlitzdüse (320) abgegebenen Suspension zu messen.

5. Vorrichtung (300) nach Anspruch 1, wobei das zweite Rohr (332) eine Struktur aufweist die eine öffenbare/freilegbare Lufteintrittsöffnung aufweist die an einer Seite des zweiten Rohrs (332) ausgebildet ist.

6. Vorrichtung (300) nach Anspruch 1, ferner umfassend:
eine Beschichtungswalze (340) die dafür ausgelegt ist den Stromsammler (C) zu stützen und zu übertragen; und
eine Trocknungskammer (350) die dafür ausgelegt ist die an den Stromsammler (C) abgegebene Elektrodensuspension (S) zu trocknen.

7. Vorrichtung (300) nach Anspruch 1, wobei das Suspensionsübertragungsrohr (330) ferner eine Förderpumpe (360) enthält die dafür ausgelegt ist die im Suspensionsbehälter (310) gespeicherte Elektrodensuspension (S) der Schlitzdüse (320) zuzuführen.

8. Verfahren zum Beschichten einer Elektrodensuspension (S) unter Verwendung der Vorrichtung (300) zum Beschichten einer Elektrodensuspension (S) nach Anspruch 1, wobei das Verfahren Folgendes umfasst:
Abgeben der Elektrodensuspension (S) an den Stromsammler (C) der sich in einer Beschichtungsrichtung (MD) durch die Schlitzdüse (320) bewegt und Auftragen der Elektrodensuspension (S) auf den Stromsammler (C); und
Trocknen der auf den Stromsammler (C) aufgetragenen Elektrodensuspension (S),
wobei beim Auftragen der Elektrodensuspension (S), wenn Höhen der auf den Stromsammler (C) aufgetragenen Elektrodensuspension (S) einem zentralen Abschnitt und einem peripheren Abschnitt auf beiden Seiten des zentralen Abschnitts bezogen auf eine Breitenrichtung (TD) entsprechen, eine Dickenabstufung zwischen dem zentralen Abschnitt und dem peripheren Abschnitt kleiner als oder gleich 5 % ist.

9. Verfahren nach Anspruch 8, wobei:
das Auftragen der Elektrodensuspension (S) das Übertragen der im Suspensionsbehälter (310) gespeicherten Elektrodensuspension (S) zur Schlitzdüse (320) durch das Suspensionsübertragungsrohr (330) umfasst; und
beim Übertragen der Elektrodensuspension (S) zur Schlitzdüse (320) eine Temperatur der Elektrodensuspension (S) im Bereich von 20 °C bis 30 °C geregelt wird.

## Revendications

1. Dispositif (300) pour l'enduction d'une suspension d'électrode (S), comprenant :
un réservoir de suspension (310) configuré pour stocker une suspension d'électrode (S) ;
une filière à fente (320) configurée pour distribuer la suspension d'électrode (S) stockée dans le réservoir de suspension (310) vers un collecteur de courant (C) ; et
un tuyau de transfert de suspension (330) configuré pour transférer la suspension d'électrode (S) stockée dans le réservoir de suspension (310) vers la filière à fente (320),
dans lequel le tuyau de transfert de suspension (330) présente une structure comprenant :
un premier tuyau (331) raccordé de manière fluide au réservoir de suspension (310) et à la filière à fente (320) ;
un deuxième tuyau (332) espacé d'une paroi externe du premier tuyau (331) d'un intervalle prédéterminé et formant un espace sous vide (333) entre le premier tuyau (331) et le deuxième tuyau (332) dans une phase opérationnelle, et
dans lequel le tuyau de transfert de suspension (330) comprend un troisième tuyau (335) situé entre le premier tuyau (331) et le deuxième tuyau (332) et entourant le premier tuyau (331), et présente une structure dans laquelle un fluide est configuré pour être introduit entre le premier tuyau (331) et le troisième tuyau (335),
dans lequel le fluide est à un état liquide ou de gel.

2. Dispositif (300) selon la revendication 1, comprenant en outre :
une partie d'alimentation en fluide (336) raccordée de manière fluide au troisième tuyau (335) et configurée pour alimenter un fluide entre le premier tuyau (331) et le troisième tuyau (335) ; et
un régulateur de température (337) configuré pour réguler une température du fluide alimenté entre le premier tuyau (331) et le troisième tuyau (335).

3. Dispositif selon la revendication 2, dans lequel un régulateur de température (337) est configuré pour réguler une température du fluide introduit entre le premier tuyau (331) et le troisième tuyau (335) dans la plage de 20 °C à 30 °C.

4. Dispositif (300) selon la revendication 1, dans lequel la filière à fente (320) comprend en outre un capteur de température configuré pour mesurer la température de la suspension transférée dans la filière à fente (320) ou distribuée depuis la filière à fente (320).

5. Dispositif (300) selon la revendication 1, dans lequel le deuxième tuyau (332) présente une structure ayant une ouverture d'entrée d'air pouvant être ouverte/découverte formée sur un côté du deuxième tuyau (332).

6. Dispositif (300) selon la revendication 1, comprenant en outre :
un rouleau d'enduction (340) configuré pour soutenir et transférer le collecteur de courant (C) ; et
une chambre de séchage (350) configurée pour sécher la suspension d'électrode (S) distribuée vers le collecteur de courant (C).

7. Dispositif (300) selon la revendication 1, dans lequel le tuyau de transfert de suspension (330) comprend en outre une pompe d'alimentation (360) configurée pour alimenter la suspension d'électrode (S) stockée dans le réservoir de suspension (310) à la filière à fente (320).

8. Procédé d'enduction d'une suspension d'électrode (S) utilisant le dispositif (300) pour l'enduction d'une suspension d'électrode (S) selon la revendication 1, le procédé comprenant :
la distribution de la suspension d'électrode (S) au collecteur de courant (C) se déplaçant dans une direction d'enduction (MD) à travers la filière à fente (320) et l'application de la suspension d'électrode (S) sur le collecteur de courant (C) ; et
le séchage de la suspension d'électrode (S) appliquée sur le collecteur de courant (C),
dans lequel, lors de l'application de la suspension d'électrode (S), lorsque des hauteurs de la suspension d'électrode (S) appliquée sur le collecteur de courant (C) correspondent à une partie centrale et une partie périphérique sur les deux côtés de la partie centrale sur la base d'une direction de la largeur (TD), une différence d'épaisseur entre la partie centrale et la partie périphérique est inférieure ou égale à 5 %.

9. Procédé selon la revendication 8, dans lequel :
l'application de la suspension d'électrode (S) comprend le transfert de la suspension d'électrode (S) stockée dans le réservoir de suspension (310) vers la filière à fente (320) à travers le tuyau de transfert de suspension (330) ; et
lors du transfert de la suspension d'électrode (S) vers la filière à fente (320), une température de la suspension d'électrode (S) est régulée dans la plage de 20 °C à 30 °C.
